(19) **Europäisches Patentamt / European Patent Office / Office européen des brevets**

(11) **EP 1 602 675 B1**

(12) **EUROPEAN PATENT SPECIFICATION**

(45) Date of publication and mention
of the grant of the patent:
**10.09.2014 Bulletin 2014/37**

(21) Application number: **04711496.2**

(22) Date of filing: **16.02.2004**

(51) Int Cl.:
$C08G\ 18/00$ (2006.01)     $C08J\ 9/00$ (2006.01)

(86) International application number:
**PCT/JP2004/001640**

(87) International publication number:
**WO 2004/072142 (26.08.2004 Gazette 2004/35)**

(54) **FLEXIBLE POLYURETHANE FOAM**

POLYURETHAN-WEICHSCHAUMSTOFF

MOUSSE DE POLYURETHANNE SOUPLE

(84) Designated Contracting States:
**DE FR**

(30) Priority: **17.02.2003   JP 2003038125**

(43) Date of publication of application:
**07.12.2005   Bulletin 2005/49**

(73) Proprietor: **NHK Spring Co., Ltd.**
**Yokohama-shi, Kanagawa 236-0004 (JP)**

(72) Inventors:
 • **HASHIMOTO, Satoru**
  **c/o NHK SPRING CO., LTD.**
  **Kanagawa 236-0004 (JP)**
 • **ASOBE, Kunio**
  **c/o NHK SPRING CO., LTD.**
  **Kanagawa 236-0004 (JP)**

(74) Representative: **Muschke, Markus Artur Heinz**
**Schwabe, Sandmair, Marx**
**Patentanwälte**
**Stuntzstrasse 16**
**81677 München (DE)**

(56) References cited:
**EP-A1- 1 029 742     EP-A1- 1 277 774**
**JP-A- 11 322 875     JP-A- 2001 329 042**
**JP-A- 2003 040 966   US-A- 4 356 273**

Remarks:
The file contains technical information submitted after
the application was filed and not included in this
specification

**Description**

Technical Field

The present invention relates to flexible polyurethane foam, and more particularly, to flexible polyurethane foam which rarely bottoms out, has excellent vibration-absorption ability and durability, and is suitably used as padding materials for automobile and aircraft seating and beds.

Background Art

Flexible polyurethane foam (hereinafter sometime simply referred to as "polyurethane foam", "urethane foam", or "foam") has been widely used as padding materials for vehicle seat cushions and backrests. Conventionally, most vehicle sheets have been formed of combination of polyurethane foam and a metal spring. Recently, however, a "full-foam type" seat structure formed of combination of urethane foam and a metal panel, in which a metal spring is not used, has been frequently used to cut the cost. The full-foam type seat uses a thick urethane foam as a padding material. Therefore, riding comfort can be improved by improving the performance of urethane itself.

Recently, to reduce weight and cost of polyurethane foam for vehicle-seat padding material, the density of polyurethane foam has been required to lower. As a method of measuring the firmness of polyurethane foam, JIS (Japanese Industrial Standards) K6400 (plastic, materials - products, 1999) is widely known. In this method, the firmness of urethane foam is evaluated based on standard firmness: "25% firmness". The "25% firmness" represents the firmness of polyurethane foam obtained when it is compressed by 25% of its initial thickness. When the density of polyurethane foam is reduced by increasing the amount of water serving as a foaming agent while keeping the "25% firmness" constant, the amount of resin (polyurethane) per unit volume decreases and numerous rigid and fragile urea bonds are produced. As a result, the durability of the resultant urethane foam decreases, causing "permanent set". More specifically, "humidity/heat compression residual deflection" and "reduction rates of repeated compression 25% firmness" increase. The "humidity/heat compression residual deflection" represents the deflection in a change rate of thickness between before and after the test, which obtained when after the sample pieces were compressed to 50% thickness of the original pieces, they were preserved in a thermostat having given temperature and humidity for a given time. The "reduction rates of repeated compression 25% firmness" represent reduction rates of 25% firmness between before and after the test, which obtained when sample pieces were repeatedly and continuously compressed to 50% thickness of the original pieces 80,000 times.

When the density of polyurethane foam is reduced, the riding comfort decreases in various aspects. The static riding comfort is often represented by numerical data value given by compression deflection curve, which is obtained by compressing a foam sample test-piece by a pressurizing iron board. As is apparent from the data listed in Table 2 (shown later), when a low density of polyurethane foam is produced while keeping "25% firmness" constant, the deflection difference between pressure 490N and 882N in a static load test, in which the polyurethane foam is compressed by a pressuring iron board to a force of 882N, then the load is removed (hereinafter, simply referred to as "deflection difference between pressure 490N and 882N") is likely to decrease. In other words, when a seat is formed of low-density polyurethane foam padding material, the seat will easily bottom out without the user feeling of a sufficient compression stroke.

Furthermore, a vibration transmissibility increases by lowering the density of polyurethane. It has been reported that a human organ resonates when vibrations of the region of 4 to 8 Hz are transmitted thereto, with the result that a person will be fatigued and develop carsickness. In general, a transmissibility at 6 Hz is often used as an index when vibration transmissibility is evaluated. In the case of a vehicle seat, it is generally said that a resonance frequency is present between 3 to 5 Hz. From a vibration engineering point of view, to reduce the vibration transmissibility at 6 Hz, the resonance frequency must be shift toward a lower frequency range. However, as the density of polyurethane foam is reduced, the resonance vibration increases. As a result, the transmissibility of 6 Hz vibration increases, the vibration characteristics of such polyurethane foam deteriorates. The data of Table 2 (shown later) also support this.

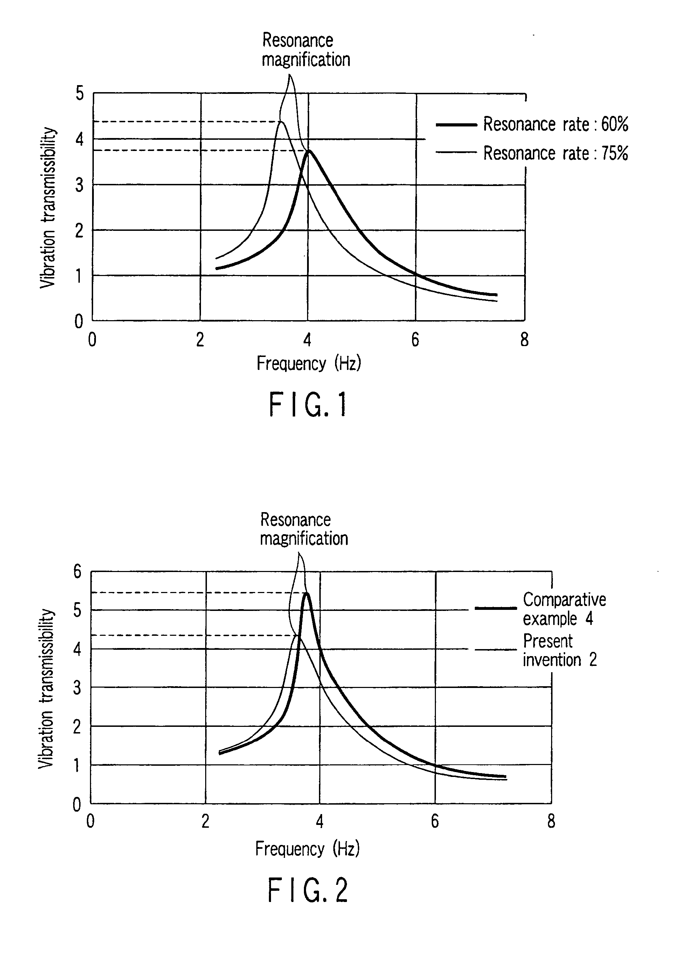

As shown in FIG. 1, if resilience rate is increased by changing the composition of polyurethane foam, the resonance frequency can be reduced. Thus, the transmissibility of 6 Hz can be reduced. In this case, however, a vibration transmissibility at the resonance point (called resonance magnification) inevitably increases. The problem that a vehicle vibrates and the user loses sense of security occurs (see, "an approach to Evaluation of Riding and Seating comfort", POLYURETHANES EXPO '98, p 499, Table 10).

In the meantime, generally, when the humidity of the air increases, the hydrogen bonds of flexible polyurethane foam are cleaved, decreasing the firmness of polyurethane foam. In other words, since the firmness of a polyurethane-foam cushioning material changes depending upon the ambient humidity, the feeling of the polyurethane foam greatly changes.

On the other hand, to keep a broad space within a car, there is a desire to reduce the thickness of a seat pad as much as possible. To satisfy such a desire, attention is drawn to the relationship between the thickness of polyurethane foam and static load/ vibration characteristics (see, e.g., Japanese Patent Application KOKAI No. 11-322875).

EP 1 277 774 describes polyurethane rigid foams prepared using a perfluoroalkyl surfactant.

In EP 1 029 742 a polyurethane foam is prepared useful for sound absorption in a vehicle. The foam is prepared using a perfluoralkyl surfactant. The foam prepared however is not suitable for cushioning because of the low density and the the large cell size.

Disclosure of Invention

As described, when the density of polyurethane foam for seat cushioning material is reduced, the durability decreases, causing settling, and bottom-out and vibration transmissibility inevitably increase. Furthermore, since the firmness of polyurethane foam changes with humidity, the feeling of polyurethane foam inevitably changes.

The present invention has been made to solve the aforementioned problems and provides flexible polyurethane foam satisfying requirements of high performance, low density, and thickness reduction. Therefore, it is an object of the present invention to provide a polyurethane foam which rarely bottoms out and has excellent durability and vibrational dampening. It is another object of the present invention to provide a polyurethane foam causing little change in firmness even if humidity changes.

The present inventors have conducted intensive studies to attain the aforementioned objects by paying attention to static load, the cell structure, and composition of polyurethane foam. As a result, they found that the aforementioned objects can be attained by adding a specific surfactant as a cell regulator. Based on the finding, the present invention has been accomplished.

More specifically, according to the present invention, there is provided a flexible polyurethane foam for a cushioning material, the flexible polyurethane foam comprising a polyol and an isocyanate as main components, and a fluoride surfactant as a cell regulator, wherein the fluoride surfactant has a structure of a perfluoroalkyl group, and exhibits a foaming height of 3 mm or more in a toluene solution containing the surfactant at a concentration of 0.1% by mass or in an aqueous ethanol solution containing the surfactant at a concentration of 60% by mass, five minutes after the toluene solution or the aqueous ethanol solution is stirred.

In the present invention, the flexible polyurethane foam may have a humidity/heat compression residual deflection at a temperature 49 to 51°C and a humidity 90 to 100% and a reduction rate of repeated compression 25% firmness both lower by 5% or more, as compared to a flexible polyurethane foam that has the same density and 25% firmness but contains no the fluoride surfactant.

In the present invention, the flexible polyurethane foam may also have a deflection difference between pressure 490N and 882N in a static load test larger by 1 mm or more, as compared to a flexible polyurethane foam that has the same density and 25% firmness but contains no the fluoride surfactant.

In the present invention, the flexible polyurethane foam may also have a resonance magnification and transmissibility at 6 Hz both lower by 5% or more, as compared to a flexible polyurethane foam that has the same density and 25% firmness but contains no the fluoride surfactant.

In the present invention, the flexible polyurethane foam may also have a change rate of 25% firmness with a humidity change smaller by 5% or more, as compared to a flexible polyurethane foam that has the same density and 25% firmness but contains no the fluoride surfactant.

The flexible polyurethane foam according to the present invention can satisfy the requirements of high performance, low density or thickness reduction, compared to flexible polyurethane foam currently in use and having the aforementioned problem.

Brief Description of Drawings

FIG. 1 is a graph showing the relationship between resilience and vibration characteristics of a conventional polyurethane foam; and

FIG. 2 is a graph showing the measurement results of vibration characteristics with respect to polyurethane foams according to the present invention and comparative example 4.

Best Mode for Carrying Out the Invention

A flexible polyurethane foam according to the present invention contains a polyol and an isocyanate as main components, and a fluoride surfactant as a cell structure regulator. The fluoride surfactant (to be also referred to as "the fluoride surfactant of the present invention" hereinafter) has the structure of a perfluoroalkyl group, exhibits a foaming height of 3 mm or more in a toluene solution containing the surfactant at a concentration of 0.1% by mass or in an aqueous ethanol solution containing the surfactant at a concentration of 60% by mass, five minutes after the toluene solution or the aqueous ethanol solution is stirred. The test method of measuring the foaming height of the fluoride surfactant will be described later.

It was found that the flexible polyurethane foam of the present invention has the following excellent characteristics, as compared to a flexible polyurethane foam that has the same density and 25% firmness but contains no the fluoride surfactant of the invention. In the present invention, the term "the same density and firmness" means that the difference between the density of the flexible polyurethane foam of the present invention and that of a flexible polyurethane foam that does not contain the fluoride surfactant of the present invention is within ±2.5% of the reference value, and the difference between them in 25% firmness is within ±4%.

In the present invention, the flexible polyurethane foam may have a humidity/heat compression residual deflection at a temperature 49 to 51°C and a humidity 90 to 100% and a reduction rate of repeated compression 25% firmness both lower by 5% or more, as compared to a flexible polyurethane foam that has the same density and 25% firmness but contains no said fluoride surfactant.

The flexible polyurethane foam may also have a deflection difference between pressure 490N and 882N in a static load test larger by 1 mm or more, as compared to a flexible polyurethane foam that has the same density and 25% firmness but contains no said fluoride surfactant.

The flexible polyurethane foam may also have a resonance magnification and transmissibility of 6 Hz both lower by 5% or more, as compared to a flexible polyurethane foam that has the same density and 25% firmness but contains no said fluoride surfactant.

Now, the components of a flexible polyurethane foam of the present invention will be described.

A flexible polyurethane foam according to the present invention contains a polyol (A) and an isocyanate compound (B) as main components and produced by reacting the main components with a catalyst (C), a foaming agent (D) and the fluoride surfactant (E) of the present invention serving as a cell regulator, and optional components, such as an organic silicone-based surfactant (F) serving as a foam-shaping agent, a cross-linking agent (G), and foaming agent (H).

A polyol (A) is not particularly restricted and any polyol usually used in the art may be used. For example, polyether polyol and a polymer polyol may be used alone or in combination of two or more. It is desirable to use a polyol having a hydroxyl value within the range of 15 to 60 mg KOH/g and the overall degree of unsaturation of 0.1 meq/g or less.

A isocyanate compound (B) is not particularly restricted. For example, use may be made of aromatic groups, alicyclic groups or aliphatic isocyanate compounds having not less than two isocyanate groups, modified compounds or mixture of these compounds. Specific examples of such an isocyanate compound (B) include tolylene diisocyanate (TDI), diphenylmethane diisocyanate (MDI), and hexamethylene diisocyanate (HMDI). They may be used alone or as a compound.

A catalyst (C) is not particularly restricted and any catalyst known in the art may be used. Examples of such a catalyst include amines such as triethylenediamine, bis-(2-dimethylaminoethyl)ether, triethylamine, N-methylmorpholine, N-ethylmorpholine, tripropylamine, tributylamine, dimethylbenzylamine, N,N,N',N'-tetramethylhexamethylenediamine, N,N,N',N',N" -pentamethyldiethyleneamine, 1,8-diaza-bicyclo(5,4,0) undecene-7,1,2-dimethylimidazole, 1-butyl-2-methylimidazole, N, N-dimethyl-N-hexanolamine, dimethylethanolamine, and N-trioxyethylene-N,N-dimethylamine or organic acids of these amines; and organic metal compounds such as stannous octoate, dibuthyltindilaurate, and zinc naphthalate.

As a foaming agent (D), water ($H_2O$) may be used. When water is used, it reacts with an isocyanate group to produce carbonic acid gas, which is virtually used as the foaming agent. Note that as an auxiliary foaming agent, a low-boiling point organic compound may be used. Alternatively, a $CO_2$ loading apparatus may be used for supplying carbon acid gas into a mixture solution of raw materials to produce foams.

As a fluoride surfactant (E) serving as a cell regulator, for example, use may be made of DS-101, DS-102, DS-202, DS-301, DS-401, DS-403, DS-451 (manufactured by Daikin Industries Ltd.); S-111, S-112, S-113, S-121, S-131, S-132, S-141, S-145, S-393, KH-40 (manufactured by Asahi Glass Co., Ltd); and F-110, F-116, F-120, F-142D, F-144D, F-150, F-160, F-171, F-172, F-173, F-177, F-178A, F-178K, F-179, F-183, F-184, F-191, F-471, F-477, F-478, F-812 (manufactured by Dai-Nippon Ink Chemical Industries Co., Ltd.). The fluoride surfactant of the present invention, which has the structure of a perfluoroalkyl group, exhibits a foaming height of 3 mm or more in a toluene solution containing the surfactant at a concentration of 0.1% by mass or in an aqueous ethanol solution containing the surfactant at a concentration of 60% by mass, five minutes after the toluene solution or the aqueous ethanol solution is stirred. In consideration of this, F-177 and F-478 and S-393 are preferably used.

As an organic silicone-based surfactant (F) serving as a foam-shaping agent, any known organic silicone-based surfactant in the art may be optionally used. For example, use is made of L-3601, L-5309, L-5366, SZ-1306, SZ-1311, SZ-1313, SZ-1318, SZ-1323, SZ-1340, SZ-1341, and SZ-1342 (manufactured by Nihonunica Corporation), PRX-607, SF-2969, SF-2964, SRX-274C, SF-2961, SF-2962, and SF-2965 (manufactured by Dow Corning Toray silicone Co., Ltd.).

A cross-linking agent (G) may be used to improve physical characteristics of polyurethane foam. Preferably, a compound having a hydroxyl value of 200 to 1,800 mg KOH/g may be used. For example, use may be made of alcohol amines such as diethanol amine, triethanol amine, monoethanole amine, monopropanol amine, dipropanol amine, tripropanol amine, N-methyl-diethanol amine, N-phenyl-dipropanol amine; polyamines such as tolylene diamine, diethyltolylene diamine, diaminodiphenylmethane, isophorone diamine, hexamethylenediamine, ethylenediamine, and diethylenetridiamine; compounds composed of an alkylene oxide added to a polyamine or an amino alcohol; and aliphatic polyols such as glycerin. Other than these, cross-linking agents known in the art may be used. These cross-linking agents may be used alone or in a mixture of two or more.

A foam breaker (H) is used to control air permeability and crushing of flexible polyurethane foam. Such a foam breaker is not particularly restricted and a cell opener known in the art may be used. For example, P-505s (manufactured Mistui Takeda Chemicals Inc.) and EL-985 (Asahi Glass Co., Ltd.) may be mentioned.

A preferable composition rate of the present invention will be described by a mass ratio to the amount of polyol (A) being 100.

Note that the mass ratio of an isocyanate compound (B) is obtained by calculating an equivalent ratio (called NCO index) of the hydroxyl groups of raw materials to the isocyanate groups of a polyisocyanate. In the case where the equivalent of the hydroxyl groups of the raw materials except an isocyanate is equal to that of the isocyanate groups to the polyisocyanate, NCO Index becomes 100.

(A) Polyol: 100
(B) Isocyanate compound: NCO Index = 90 to 100
(C) Amine catalyst: 0.1 to 1.0
(D) Foaming agent ($H_2O$): 2.0 to 5.0
(E) Fluoride surfactant (cell adjuster): 0.0001 to 5.0
(F) Organic silicone based surfactant (foam-shaping agent): 0.1 to 3.0
(G) Cross-linking agent: 0.1 to 5.0
(H) Foam-breaking agent: 0.1 to 5.0

Next a method of producing polyurethane foam according to the present invention will be explained below.

(Examples)

The present invention will be explained in detail by way of Examples, which should not be construed as limiting the scope of the present invention.

[Foaming method]

Raw materials except an isocyanate compound (B) were blended in a 3-liter beaker with a handle in predetermined contents so as to obtain a predetermined total amount.

The mixture was stirred for 30 seconds by a mixer and then an isocyanate compound was added thereto. After stirring for 5 seconds, the mixture was immediately poured in a mold of $400 \times 400 \times 100$ mm adjusted at a temperature of $65 \pm 2$°C in advance, and the mold was closed. After curing the mixture for 5 minutes, urethane foam was taken out from the mold and compressed and crushed by hands.

[Materials]

Raw materials used in this example are as follows:

EP-950: polyol manufactured by Mitsui Takeda Chemicals Inc.;
POP 31/28: polymer polyol manufactured by Mitsui Takeda Chemicals Inc.;
DABCO 33LV: amine catalyst manufactured by Air Products Ltd.;
NIAX A-1: amine catalyst manufactured by Crompton Corp;
KL-210: cross-linking agent manufactured by Mitsui Takeda Chemicals Inc.;
SF2962: silicone foam-shaping agent manufactured by Dow Corning Toray silicone Co., Ltd.;
L-3601: silicone foam-shaping agent manufactured by Nihonunica Corporation;
TM-20: isocyanate manufactured by Mitsui Takeda Chemicals Inc.;
EP-505s: foam-breaking agent manufactured by Mitsui Takeda Chemicals Inc.;
F-177, F-471, F-477, F-478: fluoride surfactant (manufactured by Dai-Nippon Ink Chemical Industries Co., Ltd.), which was used as a 10% by mass (in terms of pure ingredient) toluene solution (toluene: F-177, F-471, F-477 = 9:1, toluene: F-478 = 2:1);

S-393, KH-40: fluoride surfactant (manufactured by Seimi Chemical Co., Ltd.), which was used as a 10% by mass (in terms of pure ingredient) toluene solution (toluene: S-393, KH-40 = 9:1).

[Physical property test]

Sample test pieces were prepared from the urethane foam produced by the aforementioned method and subjected to physical property, static load, and vibration tests. Physical properties were checked in accordance with JIS K6400. The detailed conditions are as follows:

Overall density: the dimensions (length, wide, thickness) and weight of test sample pieces (400 × 400 × 100 mm), each have a skin portion attached thereto, were measured to obtain the values of density.
25% firmness: Sample pieces of 400 × 400 × 100 mm are compressed by applying load at a pressurizing rate of 50 mm/min.

Humidity/heat compression residual deflection (50°C x 95%): the thickness of sample pieces of product thickness 40 ± 1 mm (t0) were measured. After the sample pieces were compressed to 50% thickness of the original pieces and firmed, they were preserved in a thermostat having temperature 50 ± 1°C and humidity 95 ± 5% for 22 hours. After they were taken out from the thermostat and allowed to stand for 30 minutes, the thickness of them (t1) was measured. From these values t1 and t0, a "humidity/heat compression residual deflection (50°C × 95%)" was obtained in accordance with the equation: $(50°C × 95\%) = \{(t0-t1)/t0\} × 100$.

Reduction rate of repeated compression 25% firmness:

Using sample pieces of 100 × 100 × 50 mm with skin attached to the upper surface alone, "25% firmness" (H0) was measured before the test. After the sample pieces were repeatedly and continuously compressed to 50% thickness of the original pieces 80,000 times, they were taken out from a compression apparatus and allowed to stand for 24 hours. After that "25% firmness" (H1) was measured in the same manner as mentioned above. From these values H0 and H1, a "reduction rate of repeated compression 25% firmness" was obtained in accordance with the equation:

$$\text{"Reduction rate of repeated compression 25\% firmness"} = (H0-H1)/H0 × 100.$$

Reduction rate of 25% firmness with humidity:

Sample pieces of 100 × 100 × 50 mm (having skin on the upper surface alone) were left to stand in the ambient situation of 23°C and a humidity of 30%, for 24 hours. Immediately upon taking out sample pieces from the ambient situation, the "25% firmness" (H30) was measured. Thereafter, the sample pieces were left to stand in the environment of 23°C and a humidity of 50% for 24 hours. Thereafter, the "25% firmness" (H50) was measured in the same manner as mentioned above. Thereafter, the sample pieces were left to stand in the environment of 23°C and a humidity of 70% for 24 hours. The "25% firmness" (H70) was measured in the same manner as mentioned above. As a result, the change rate of "25% firmness" with humidity was obtained by the following equation:

$$\text{Change rate with Humidity} = (H30 - H70)/H50/40 × 100.$$

$$[\text{Static load test}]$$

Test sample pieces (400 × 400 × 100 mm) were compressed by a pressuring iron board at a pressurizing rate of 150 mm/minute to a force of 882N. Upon removing the load of the pressuring iron board, the test sample pieces were left alone for one minute. The test was then repeated in the same conditions above. In this way, the deflection difference between pressure 490N and 882N was obtained.

[Vibration test]

Using test sample pieces (400 × 400 × 100 mm), a vibration test was performed in accordance with JASO B-407. The test sample pieces were vibrated under pressure of 50 kg of an iron board while applying a frequency having an amplitude of ±2.5 mm to obtain the transmissibility (vibration transfer rate). Form the transmissibility obtained, a resonance frequency, resonance magnification, and the transmissibility of a 6 Hz were obtained.

[Foamability test]

First, 50g of a toluene solution containing a fluoride surfactant in an amount of 0.1% by mass (in terms of pure ingredient) or 50 g of a 60 mass % aqueous ethanol solution containing the fluoride surfactant in an amount of 0.1% by mass (in terms of an active ingredient) was placed in a glass bottle, M-140 (inner volume 140 cc) manufactured by Hakuyou Glass. After the temperature of the mixture was adjusted at $20 \pm 2°C$, the mixture was shaken up and down for one minute at a frequency of 3 Hz having an amplitude of ±40 mm by means of Dynamic flexing testerasker DF-10 manufactured by Koubunnsi Keiki. Five minutes after the shaking, the height of foam attached onto the sidewall of a glass bottle was measured by a scale. The height was recorded as "foaming height" (mm).

Table 1 shows flexible polyurethane foam compositions same in firmness and different in density. Table 2 shows the results of physical properties measured on the flexible polyurethane foams listed in Table 1.

Table 1

| Composition name | Composition 1 | Composition 2 | Composition 3 |
|---|---|---|---|
| EP-950 | 60 | 50 | 40 |
| POP-31/28 | 40 | 50 | 60 |
| $H_2O$ | 2.9 | 3.4 | 4.0 |
| DABCO 33LV | 0.42 | 0.42 | 0.42 |
| NIAXA-1 | 0.09 | 0.09 | 0.09 |
| KL-210 | 1.0 | 1.0 | 1.0 |
| SF-2962 | 0.3 | 0.5 | 0.8 |
| L-3601 | 0.7 | 0.5 | 0.2 |
| TM-20 (NCO Index) | (105) | (105) | (105) |

Table 2

| | Comp.ex.1 | Comp.ex.2 | Comp.ex.3 |
|---|---|---|---|
| Composition name | Composition 1 | Composition 2 | Composition 3 |
| Overall density (kg/m$^3$) | 55.3 | 47.8 | 40.5 |
| Humidity/heat compression residual (N) | 246 | 236 | 231 |
| Humidity/heat compression residual (%) | 10.4 | 15.5 | 22.3 |
| Reduction rate of repeated compression 25% firmness (%) | 6.7 | 7.2 | 9.5 |
| Deflection difference between pressure 490N and 882N (mm) | 23.5 | 22.2 | 20.8 |
| Resonance frequency (Hz) | 3.49 | 3.64 | 3.93 |
| Resonance magnification | 5.9 | 5.2 | 4.7 |
| 6Hz transmissibility | 0.73 | 0.81 | 1.02 |

From the results of Comparative Examples 1 to 3 shown in Table 2, it is demonstrated that as the overall density of flexible polyurethane foam is reduced while keeping the same "25% firmness", the "humidity/heat compression residual deflection (50°C × 95%)" and "reduction rate of repeated compression 25% firmness" decrease. This means the durability of the polyurethane foams obtained in the Comparative Examples is low. When the density of foam decreases, the "deflection difference between pressure 490N and 882N" (obtained in a static load test) decrease. From this, when any one of the urethane foams of the Comparative Examples is used as a seat cushion padding material, the material bottoms out without the user feeling of a compression stroke. On the other hand, when the density is reduced, resonance frequency and the transmissibility of a 6 Hz of the vibration properties increase. Therefore, when the user sits on a vehicle seat cushion formed of a padding material according to any one of Comparative Examples, he easily develops a carsickness and fatigue.

Table 3 shows the foamability of solutions containing a fluoride surfactant in a concentration of 1% by mass in terms of pure ingredient.

Table 3

| Fluoride surfactant | F-177 | F-471 | F-477 | F-478 | S-393 | KH-40 |
|---|---|---|---|---|---|---|
| Effective component/% | 100 | 100 | 100 | 30 | 100 | 100 |
| Foaming height/mm (0.1 mass% toluene solution) | 5 | 0 | 0 | 14 | 6 | 0 |
| Foaming height/mm (60 mass% ethanol solution) | 10 | 0 | 2 | 18 | 10 | 2 |

As is apparent from Table 3, the foamability varies depending upon the type of fluoride surfactant. Of the surfactants listed in the table, fluoride surfactants according to the present invention are F-177, F-478, and S-393.

Table 4 shows the compositions of fluorocarbon-containing polyurethane foams. Table 5 shows the physical properties of the polyurethane foams listed in Table 4.

Table 4

| Composition name | Comp.4 | Comp.5 | Comp.6 | Comp.7 | Comp.8 | Comp.9 | Comp.10 | Comp.11 |
|---|---|---|---|---|---|---|---|---|
| EP-950 | 40 | 55 | 55 | 55 | 55 | 55 | 55 | 55 |
| POP-31/28 | 60 | 45 | 45 | 45 | 45 | 45 | 45 | 45 |
| $H_2O$ | 4.0 | 4.0 | 4.0 | 4.0 | 4.0 | 4.0 | 4.0 | 4.0 |
| DABCO 33LV | 0.42 | 0.42 | 0.42 | 0.42 | 0.42 | 0.42 | 0.42 | 0.42 |
| NIAXA-1 | 0.09 | 0.09 | 0.09 | 0.09 | 0.09 | 0.09 | 0.09 | 0.09 |
| KL-210 | 1.0 | 1.0 | 1.0 | 1.0 | 1.0 | 1.0 | 1.0 | 1.0 |
| L-3601 | 0.7 | 0.7 | 0.7 | 0.7 | 0.7 | 0.7 | 0.7 | 0.7 |
| F-177 toluene solution | - | - | 0.3 | - | - | - | - | - |
| F-471 toluene solution | - | - | - | 0.3 | - | - | - | - |
| F-477 toluene solution | - | - | - | - | 0.3 | - | - | - |
| F-478 toluene solution | - | - | - | - | - | 0.3 | - | - |
| S-393 toluene solution | - | - | - | - | - | - | 0.1 | - |
| KH-40 toluene solution | - | - | - | - | - | - | - | 0.3 |
| TM-20 (NCO Index) | (105) | (105) | (105) | (105) | (105) | (105) | (105) | (105) |

Table 5

| | Comp. ex. 4 | Comp. ex.5 | Pr. Inv.1 | Comp. ex.6 | Comp. ex.7 | Pr. Inv.2 | Pr. Inv.3 | Comp. ex.8 |
|---|---|---|---|---|---|---|---|---|
| Composition name | Comp.4 | Comp.5 | Comp.6 | Comp.7 | Comp.8 | Comp.9 | Comp.10 | Comp.1 |
| Overall density (kg/m$^3$) | 42.2 | 41.8 | 41.9 | 41.2 | 41.5 | 41.8 | 41.7 | 41.6 |
| 25% firmness (N) | 264 | 233 | 262 | 234 | 235 | 255 | 261 | 233 |
| Humidity/heat compression residual (%) | 21.7 | 18.3 | 18.2 | 17.5 | 18.1 | 17.6 | 17.7 | 18.2 |

(continued)

| | Comp. ex. 4 | Comp. ex.5 | Pr. Inv.1 | Comp. ex.6 | Comp. ex.7 | Pr. Inv.2 | Pr. Inv.3 | Comp. ex.8 |
|---|---|---|---|---|---|---|---|---|
| Reduction rate of repeated compression 25% firmness (%) | 11.1 | 10.4 | 8.8 | 10.2 | 9.9 | 8.9 | 8.7 | 9.1 |
| Change rate of 25% firmness with humidity (%) | 0.28 | 0.27 | 0.24 | 0.26 | 0.26 | 0.24 | 0.23 | 0.26 |
| Deflection difference between pressure 490N and 882N (mm) | 22.0 | 21.6 | 25.2 | 22.3 | 22.8 | 24.5 | 25.0 | 22.7 |
| Resonance frequency (Hz) | 3.78 | 3.85 | 3.68 | 3.92 | 3.81 | 3.60 | 3.61 | 3.77 |
| Resonance magnification | 5.30 | 5.06 | 4.72 | 5.09 | 5.10 | 4.38 | 4.58 | 5.23 |
| 6Hz transmissibility | 0.98 | 1.01 | 0.83 | 0.98 | 0.95 | 0.87 | 0.86 | 0.98 |

Different from Comparative Example 4 (Composition 4), the polyurethane foams of the present inventions 1 to 3 contains a polyol and a polymer polyol in a ratio of 55:45 so as to have the same "25% firmness". The polyurethane foam of Comparative Example 5 (Composition 5) has the same composition as in Examples 1 to 3 except that no fluoride surfactant is contained. As is apparent from the comparison between Examples 1 to 3 and Comparative Example 5, the "25% firmness" of polyurethane foam is increased by addition of a fluoride surfactant.

From the physical properties of the polyurethane foams of Comparative Examples 6 to 8 containing different types of surfactants outside the scope of the present invention, it is clear that they have the same "25% firmness" as that of Comparative example 5. From the results, it is demonstrated that "25% firmness" increases if a fluorine surfactant outside the scope of the present invention is used.

When the polyurethane foams of the present inventions 1 to 3 are compared to that of Comparative Example 4, it is found that all values of "humidity/ heat compression residual deflection", the "Reduction rate of repeated compression 25% firmness" and "firmness change with humidity" are low. In addition, the "deflection difference between pressure 490N and 882N" (which is an index indicating "bottom out") is large. Vibration characteristics of the polyurethane foams according to the present invention 2 and Comparative Examples 4 are shown in FIG. 2, all of resonance frequency, resonance magnification, and the transmissibility of 6 Hz of the present invention 2 are low. Based on these facts, it is found that a vibration transmissibility is low in a resonance frequency range larger than a resonance frequency. There is no significant difference in physical properties between Comparative examples 6 to 8 and Comparative Example 5 each having the same density and firmness.

From the results, it is demonstrated that the properties of polyurethane foam can be greatly improved by addition of a fluoride surfactant of the present invention. Therefore, when the polyurethane foam of the present invention is used as padding materials for vehicle cushions, the following effects can be expected.

1. Values of "humidity/heat compression residual deflection" and "reduction rate of repeated compression 25% firmness" are reduced. Therefore, the durability of the cushion increases.
2. "Deflection difference between pressure 490N and 882N" obtained in a static load test is large. Therefore, polyurethane foam rarely bottoms out.
3. All values of resonance frequency, resonance magnification, and 6 Hz transmissibility, obtained in a static load test are low. Therefore, the vibration transmissibility in the larger resonance frequency than a resonance frequency is low, preventing the user from being fatigued and suffering carsickness.
4. The "25% firmness" changes with humidity but little. Therefore, riding comport is not affected by the ambient conditions.

The present invention successfully provides a novel flexible polyurethane foam satisfying requirements for high performance, low density or reduction in thickness.

**Claims**

1.  A flexible polyurethane foam for a cushioning material, the flexible polyurethane foam comprising a polyol and an isocyanate as main components, and a fluoride surfactant as a cell regulator, wherein the fluoride surfactant has a structure of a perfluoroalkyl group, and exhibits a foaming height of 3 mm or more in a toluene solution containing the surfactant at a concentration of 0.1 % by mass or in a 60 mass% aqueous ethanol solution containing the surfactant at a concentration of 0.1 % by mass, five minutes after the toluene solution or the aqueous ethanol solution is stirred, wherein the foaming height is a height of foam measured five minutes after the toluene solution or the aqueous ethanol solution, after being stirred at a temperature of $20\pm2$ °C, is shaken up and down for one minute at a frequency of 3 Hz having an amplitude of $\pm40$mm.

2.  The flexible polyurethane foam according to claim 1, having a humidity/heat compression residual deflection at a temperature 49 to 51 DEG C and a humidity 90 to 100% and a reduction rate of repeated compression 25% firmness both lower by 5% or more, as compared to a flexible polyurethane foam that has the same density and 25% firmness but contains no said fluoride surfactant.

3.  The flexible polyurethane foam according to claim 1 or 2, having a deflection difference between pressure 490N and 882N in a static load test larger by 1 mm or more, as compared to a flexible polyurethane foam that has the same density and 25% firmness but contains no said fluoride surfactant.

4.  The flexible polyurethane foam according to any one of claims 1 to 3, having a resonance magnification and transmissibility of 6 Hz both lower by 5% or more, as compared to a flexible polyurethane foam that has the same density and 25% firmness but contains no said fluoride surfactant.

5.  The flexible polyurethane foam according to any one of claims 1 to 4, having a change rate of 25% firmness with a humidity smaller by 5% or more, as compared to a flexible polyurethane foam that has the same density and 25% firmness but contains no said fluoride surfactant.

**Patentansprüche**

1.  Ein flexibler Polyurethanschaum für ein Polstennaterial, wobei der flexible Polyurethanschaum ein Polyol und ein Isocyanat als Hauptkomponenten und ein Fluoridtensid als Zellregler umfasst, wobei das Fluoridtensid eine Struktur einer Perfluoralkylgruppe aufweist, und eine Schaumhöhe von 3 mm oder mehr in einer Toluollösung, welche das Tensid in einer Konzentration von 0,1 Massen-% umfasst, oder in einer 60 Massen-% wässrigen Ethanollösung, welche das Tensid in einer Konzentration von 0,1 Massen-% umfasst, aufweist fünf Minuten nachdem die Toluollösung oder die wässrige Ethanollösung gerührt wird, wobei die Schaumhöhe eine Höhe eines Schaumes ist, welche fünf Minuten nachdem die Toluollösung oder die wässrige Ethanollösung nach dem Rühren bei einer Temperatur von $20\pm2$ °C für eine Minute bei einer Frequenz von 3 Hz mit einer Amplitude von$\pm40$ mm auf und ab geschüttelt wird gemessen wird.

2.  Der flexible Polyurethanschaum nach Anspruch 1, welcher eine Feuchtigkeit / Wärme-Kompressionsrestbiegung bei einer Temperatur von 49 bis 51 °C und einer Feuchtigkeit von 90 bis 100% und eine Reduktionsrate wiederholter Kompression bei 25%-Festigkeit erniedrigt um 5% oder mehr aufweist, als verglichen mit einem flexiblen Polyurethanschaum, welcher dieselbe Dichte und 25%-Festigkeit aufweist, aber nichts von diesem Fluoridtensid umfasst.

3.  Der flexible Polyurethanschaum nach Anspruch 1 oder 2, welcher einen Biegeunterschied bei einem Druck zwischen 490 N und 882 N in einem statischen Lasttest erhöht um 1 mm oder mehr aufweist, als verglichen mit einem flexiblen Polyurethanschaum, welcher dieselbe Dichte und 25%-Festigkeit aufweist, aber nichts von diesem Fluoridtensid umfasst.

4.  Der flexible Polyurethanschaum nach einem der Ansprüche 1 bis 3, welcher eine Resonanzüberhöhung und -übertragungskapazität von 6 Hz beide erniedrigt um 5% oder mehr aufweist, als verglichen mit einem flexiblen Polyurethanschaum, welcher dieselbe Dichte und 25%-Festigkeit aufweist, aber nichts von diesem Fluoridtensid umfasst.

5.  Flexibler Polyurethanschaum nach einem der Ansprüche 1 bis 4, welcher eine Änderungsrate der 25%-Festigkeit mit einer Feuchtigkeit erniedrigt um 5% oder mehr aufweist, als verglichen mit einem flexiblen Polyurethanschaum, welcher dieselbe Dichte und 25%-Festigkeit aufweist, aber nichts von dem Fluoridtensid umfasst.

**Revendications**

1. Mousse de polyuréthane souple pour un matériau de rembourrage, la mousse de polyuréthane souple comprenant un polyol et un isocyanate comme principaux composants, et un tensioactif fluoré comme régulateur de cellule, dans laquelle le tensioactif fluoré a une structure d'un groupe perfluoroalkyle, et présente une hauteur de moussage de 3 mm ou plus dans une solution de toluène contenant le tensioactif à une concentration de 0,1 % en masse ou dans une solution aqueuse d'éthanol à 60 % en masse contenant le tensioactif à une concentration de 0,1 % en masse, cinq minutes après que la solution dans le toluène ou la solution aqueuse éthanolique soit agitée, dans laquelle la hauteur de moussage est une hauteur de moussage mesurée cinq minutes après que la solution dans le toluène ou la solution aqueuse éthanolique, après avoir été agitée à une température de 20 ± 2°C, soit secouée de haut en bas pendant une minute à une fréquence de 3 Hz ayant une amplitude de ± 40 mm.

2. Mousse de polyuréthane souple selon la revendication 1, ayant une déflexion résiduelle après compression à l'humidité/chaleur à une température 49 à 51°C et une humidité de 90 à 100 % et un taux de réduction de la fermeté à 25 % après compressions répétées tous deux inférieurs de 5 % ou plus, par rapport à une mousse de polyuréthane souple qui a la même densité et une fermeté à 25 % mais ne contient pas ledit tensioactif fluoré.

3. Mousse de polyuréthane souple selon la revendication 1 ou 2, ayant une différence de déflexion entre une pression de 490N et 882N dans un essai de charge statique supérieure de 1 mm ou plus, par rapport à une mousse de polyuréthane souple qui a la même densité et une fermeté à 25 % mais ne contient pas ledit agent tensioactif fluoré.

4. Mousse de polyuréthane souple selon l'une quelconque des revendications 1 à 3, ayant une amplification de la résonance et une transmissibilité de 6 Hz toutes deux inférieures de 5 % ou plus, par rapport à une mousse de polyuréthane souple qui a la même densité et une fermeté à 25 %, mais ne contient pas ledit tensioactif fluoré.

5. Mousse de polyuréthane souple selon l'une quelconque des revendications 1 à 4, ayant un taux de changement de la fermeté à 25 % avec une humidité inférieure de 5 % ou plus, par rapport à une mousse de polyuréthane souple qui a la même densité et une fermeté à 25 % mais ne contient pas ledit tensioactif fluoré.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11322875 A
- EP 1277774 A
- EP 1029742 A